# EUROPÄISCHE PATENTSCHRIFT

(11) **EP 2 450 601 B1**
(45) Veröffentlichungstag und Bekanntmachung des Hinweises auf die Patenterteilung: **10.08.2016**
(21) Anmeldenummer: 10014257.9
(22) Anmeldetag: 03.11.2010
(51) Int. Cl.: F16K 1/44, F16K 1/36, F16K 17/12

(54) **Schaltventil**
Switching valve
Vanne de commande

(43) Veröffentlichungstag der Anmeldung: 09.05.2012
(73) Patentinhaber: Leinemann GmbH & Co. KG, 38110 Braunschweig (DE)
(72) Erfinder: Helmsen, Frank, 31228 Peine (DE); Kirchner, Tobias, 38533 Vordorf (DE)
(74) Vertreter: Friedrich, Andreas

(56) Entgegenhaltungen:
- EP-A2- 1 211 447
- WO-A1-2007/101901
- BE-A4- 1 005 430
- CN-U- 201 487 369
- DE-A1- 1 600 894
- DE-A1- 2 950 414
- DE-A1- 3 738 071
- DE-A1-102006 038 740
- DE-B- 1 033 474
- FR-A1- 2 552 846
- US-A- 2 813 539

## Beschreibung

Die Erfindung betrifft ein Schaltventil mit einem Ventilsitz und einem derartigen Ventilteller, der aus einer Schließstellung, in der der Ventilteller mit einer Ventiltellerfläche an dem Ventilsitz anliegt und das Überdruckventil geschlossen ist, in eine Durchflussstellung bringbar ist, in der das Überdruckventil geöffnet ist, wobei die Ventiltellerfläche einem umlaufenden Flächenrand und eine Normale, die senkrecht auf der Ventiltellerfläche steht, durch deren Schwerpunkt verläuft und eine Längsachse definiert, aufweist, wobei an dem Flächenrand eine Krempe angeordnet ist, die über einen ersten an dem Flächenrand angeordneten Teil verfügt, der bezüglich der Längsachse in axialer Richtung über die Ventiltellerfläche hinausragt.

Ein gattungsgemäßes Schaltventil ist beispielsweise aus der US 2,813,539 bekannt.

Schaltventile dienen als Über- oder Unterdruckventile und dienen der Be- und Entlüftung von Behältern, sobald in diesen ein vorbestimmter Ansprechdruck über- oder unterschritten wird. Das Funktionsprinzip unterscheidet sich dabei zwischen einem Über- und Unterdruckventil nicht. Der Ventilteller wird in die Durchflussstellung gebracht, sobald eine durch eine Druckdifferenz zwischen den Drücken auf beiden Seiten des Ventiltellers auf den Ventilteller wirkende Kraft größer ist als eine Schließkraft und dieser entgegen gerichtet ist.

Im Folgenden wird ein Überdruckventil beschrieben. Die gemachten Aussagen gelten jedoch für Unterdruckventile analog.

Medien, beispielsweise Flüssigkeiten oder Gase, werden oftmals in Behältnissen aufbewahrt, in denen der Druck einen vorbestimmten Wert nicht überschreiten darf. Das Behältnis weist daher eine Auslassöffnung auf, die durch ein Überdruckventil mit einem Ventilteller verschlossen wird. Der Ventilteller verschließt dabei mit der Ventiltellerfläche, die auf dem Ventilsitz angeordnet wird, die Öffnung. Dabei wirkt der Druck des Mediums im Behälter beispielsweise direkt auf die Ventiltellerfläche. Erreicht der Druck auf die Ventiltellerfläche einen vorbestimmten Ansprechdruck, wird der Ventilteller verschoben und gibt so die Auslassöffnung frei. Ziel ist folglich das Abführen eines Volumenstromes aus einem Behältnis, wenn innerhalb des Behältnisses ein vorbestimmter Ansprechdruck erreicht wird. Dabei sind die Ventile idealerweise nicht durch eine gesteuerte Hilfskraft zu öffnen oder zu schließen, sondern werden lediglich durch den Druck in dem Behältnis bzw. das im geöffneten Ventilzustand ausströmende Medium geöffnet oder geschlossen. Dabei müssen derartige Ventilteller idealerweise mehrere Kriterien erfüllen.

Ein entscheidendes Kriterium ist die Strömungsleistung, also die Menge des abgeführten Mediums pro Zeiteinheit. Erreicht der Druck im Inneren des Behältnisses den vorbestimmten Ansprechdruck, soll das Ventil öffnen und möglichst schnell eine ausreichende Menge des Mediums aus dem Behältnis entweichen lassen, um den Druck innerhalb des Behältnisses wieder abfallen zu lassen. Eine höhere Strömungsleistung kann dabei entweder über größere Gehäusenennweiten des Ventils, so dass das gesamte Ventil und damit auch der Ventilteller größer ausgebildet werden, oder durch einen größeren Hub des Ventiltellers erreicht werden. Auch durch einen größeren Hub wird die Auslassöffnung, die dem Medium zum Ausströmen zur Verfügung steht, vergrößert und damit der abgeführte Volumenstrom und die Strömungsleistung erhöht. Anders als die Vergrößerung des Hubes des Ventiltellers ist jedoch die Vergrößerung des Gehäuses und damit des gesamten Ventils mit einer erheblichen Erhöhung der Herstellkosten verbunden. Es ist daher sinnvoll, zunächst bei einer konstanten Gehäusenennweite den Hub des Ventiltellers zu maximieren, bevor die Gehäusenennweite vergrößert wird.

Wenn der Druck im Behältnis den Ansprechdruck erreicht und überschreitet, soll der Ventilteller den größtmöglichen Hub möglichst schnell erreichen, um möglichst schnell die volle Strömungsleistung zur Verfügung zu stellen. Im Stand der Technik hat sich dabei für normale Ventile die so genannte "10 %-Technologie" etabliert. Bei einer derartigen Technologie hat der Ventilteller den Vollhub erreicht, wenn der Druck im Behältnis 10 % über dem Ansprechdruck liegt. Um dies zu gewährleisten, muss über den gesamten Hubweg eine Kraft auf den Ventilteller wirken, die ihn von dem Ventilsitz und damit von dem Behältnis wegbewegt und größer ist als die Schließkraft des Ventiltellers. Bei gewichtsbelasteten Ventiltellern ist die Schließkraft lediglich die Gewichtskraft des Ventiltellers, es sind jedoch auch federbelastete Ventilteller bekannt, bei denen die Schließkraft neben der Gewichtskraft des Ventiltellers auch noch eine auf den Ventilteller wirkende Federkraft ist. Natürlich sind auch andere auf den Ventilteller wirkende Kräfte denkbar. Je schneller der Ventilteller Vollhub erreicht hat, nachdem der Ansprechdruck erreicht bzw. überschritten wurde, desto länger kann der Betreiber den Druck in einem Behältnis, beispielsweise einem Tank, halten, weil das Ventil bereits bei einer relativ kleinen Druckerhöhung, im Beispiel von 10 %, den Vollhub erreicht und somit die maximale Strömungsleistung zur Verfügung stellt. Dadurch werden die Mediumsverluste reduziert und somit auch die Umwelt geschont.

Neben der großen Strömungsleistung und dem schnellen Erreichen des Vollhubes wird in der Regel ein niedriger "Blow-Down" gefordert. Dies bedeutet, dass das Ventil möglichst schnell wieder schließen soll, nachdem im Behältnis, beispielsweise dem Tank, der Ansprechdruck wieder unterschritten wurde. Nachdem das Ventil voll geöffnet hat, findet ein Druckausgleich statt. Durch diesen Druckausgleich sinkt der Druck im Behältnis, so dass der durch das ausströmende Medium auf den angehobenen Ventildeckel wirkende Druck mit der Zeit nachlässt. Früher oder später wird die auf den Ventildeckel durch das ausströmende Medium wirkende Kraft geringer sein als die Schließkraft des Ventiltellers. In diesem Moment beginnt das Ventil zu schließen. Der Druck im Behältnis, bei dem dieses Schließen erfolgt, wird Schließdruck genannt. Die Differenz zwischen dem Ansprechdruck und dem Schließdruck wird "Blow-Down" genannt. Um einen niedrigen Blow-Down, also ein Schließen des Ventils möglichst nah am Ansprechdruck, zu erreichen, darf die Strömungskraft durch das austretende Medium auf den Ventilteller beim Ansprechdruck und über den gesamten Hubweg nicht viel größer sein als die Schließkraft des Ventiltellers. Auch durch einen niedrigen Blow-Down werden die Mediumsverluste reduziert und die Umwelt geschont.

Diese drei Kriterien lassen sich in der Regel nur schlecht miteinander vereinbaren, weil der ideale Ventilteller über einen großen Hub verfügt und die Strömungskraft durch das austretende Medium auf den Ventilteller über den gesamten Hubbereich in einem engen Bereich liegen muss. Zum einen muss die Strömungskraft durch das austretende Medium auf den Ventilteller größer sein als die Schließkraft des Ventiltellers, sie darf jedoch nicht viel größer sein als die Schließkraft, um einen niedrigen Blow-Down zu erreichen.

Aus dem Stand der Technik sind Überdruckventile mit verschiedenen Ventiltellerformen bekannt. Beispielsweise werden eckige Krempen oder Kegelkrempen verwendet. Der Ventilteller weist dabei eine Ventiltellerfläche auf, die über einen umlaufenden Flächenrand verfügt. An diesem ist eine Krempe, beispielsweise eine eckige Krempe oder eine Kegelkrempe, angeordnet. Wird der Ventilteller beim Öffnen des Ventils beispielsweise nach oben angehoben, erstreckt sich die Krempe umlaufend um den Ventilsitz nach unten. Eine eckige Krempe umfasst dabei zunächst einen im Wesentlichen horizontal angeordneten ersten Teil der Krempe, der sich folglich parallel zur Ventiltellerfläche erstreckt. Am äußeren Rand dieses ersten Teils befindet sich ein zweiter Teil der Krempe, der im Wesentlichen senkrecht nach unten ausgerichtet ist. Wird der Ventilteller beim Öffnen nun angehoben, strömt das Medium aus dem Ventilsitz nach oben aus und trifft dabei auf die Ventiltellerfläche. An dieser wird es zur Seite umgelenkt, bis es den zweiten Teil der Krempe, der vertikal nach unten ausgebildet ist, trifft. An diesem wird das Medium nochmals umgelenkt, so dass es den Ventilteller nach unten verlässt. Dadurch, dass zunächst ein horizontal ausgerichteter erster Teil der Krempe vorgesehen ist, wird die durch das ausströmende Medium angeströmte Fläche insbesondere bei kleinen Hüben zunächst deutlich vergrößert. Insbesondere im unteren Hubbereich entsteht daher eine Strömungskraftspitze. Dadurch wird zwar erreicht, dass der Ventilteller schnell Vollhub erreicht und so die maximale Strömungsleistung zur Verfügung stellt, gleichzeitig ist die Strömungskraft auf den Ventilteller durch das ausströmende Medium jedoch viel größer als die Schließkraft des Ventiltellers, so dass es hier zu einem sehr hohen Blow-Down kommt.

Gleiches gilt für eine Kegelkrempe, bei der die Krempe am umlaufenden Flächenrand der Ventiltellerfläche schräg nach unten verläuft. Auch hier vergrößert sich bereits bei sehr kleinen Hüben die angeströmte Ventiltellerfläche, so dass es auch hier zu einer Strömungskraftspitze kommt.

Im oberen Hubbereich, wenn die gesamte Ventiltellerfläche und die Krempe vom ausströmenden Medium angeströmt wird, verändert sich die angeströmte Fläche nicht weiter. Durch die größere Öffnung des Ventils wird die Drosselwirkung des Ringspaltes zwischen Ventilteller und Ventilsitz abgeschwächt. Oftmals befindet sich das Ventil in einem Gehäuse, dessen Ausgangsspalt nun die drosselnde Öffnung ist. Dadurch steigt im Gehäuse der Druck und die Druckdifferenz über und unter dem Ventilteller sinkt. Dadurch sinkt auch die auf den Ventilteller wirkende Kraft. Zudem trifft nicht mehr das gesamte austretende Medium auf den Ventilteller, so dass insgesamt die Gesamtströmkraft auf den Ventilteller abnimmt.

Aus der FR 2 552 846 A1 ist ein Ventil bekannt, bei dem die Verschlusskraft, durch die der Ansprechdruck auf den Ventilteller aufgebracht wird, zu einem Großteil durch ein oberhalb des Ventiltellers angeordnetes Gewicht hervorgerufen wird. Nur ein kleiner Teil der für den Ansprechdruck nötigen Kraft wird durch eine vorgespannte Feder hervorgerufen, deren Ausdehnung in Längsrichtung über eine Schraube einstellbar ist. Auf diese Weise lässt sich einfach der tatsächliche Ansprechdruck durch Verstellen der Schraube einstellen.

Die DE 1 033 474 offenbart ein gattungsgemäßes Schaltventil. Ziel der dort beschriebenen Ausführungsform eines derartigen Ventils ist jedoch, Beschädigungen der verwendeten Bauteile, insbesondere durch hohen Druck oder aggressive durch das Ventil durchströmende Materialien, zu verhindern.

Aus der CN 201 487 369 ist ein Schaltventil bekannt, bei dem ebenfalls ein Ventilteller auf einem Ventilsitz anliegt, wenn das Ventil geschlossen ist. Zwischen beiden Bauteilen ist ein Dichtring angeordnet, um im verschlossenen Ventilzustand die Dichtheit des Ventils zu gewährleisten.

Die WO 2007/101901 A1 offenbart ein Saugventil, bei dem das Offenhalten des Ventils nicht zu einem Durchschlussverlust führt.

Die DE 37 38 071 offenbart ebenfalls ein Schaltventil, bei dem die verwendeten Bauteile vor Hitze, Verunreinigungen, Druck oder aggressiven Materialien durch eine spezielle abgedichtete Hülse geschützt werden.

Die DE 16 00 894 offenbart ein Sicherheitsventil, bei dem die Abdichtung des Ventiltellers gegen den Ventilsitz im verschlossenen Ventilzustand insbesondere bei aggressiven und korrosiven Medien dadurch verbessert wird, dass der Ventilteller mit einem extrem korrosionsfesten Kunststoff, beispielsweise Polytetrafluoräthylen beschichtet ist.

Sowohl aus der BE 1 005 430 als auch aus der EP 1 211 447 A2 ist ein gattungsgemäßes Schaltventil bekannt. In letzterer Druckschrift sollen insbesondere die Ventile für hohe Drücke ausgelegt werden und zudem das zur Einstellung des Ansprechdrucks verwendete Gewicht leicht einstell- und veränderbar sein. Dazu ist am Dichtkörper selbst ein Schaft angeordnet, an dem mehrere Gewichte angebracht sind. Diese lassen sich einfach entfernen oder auswechseln.

Die DE 29 50 414 befasst sich mit der Erhöhung der Funktionssicherheit und Zuverlässigkeit eines Schaltventils insbesondere bei hohen auftretenden Drücken. Dazu ist auch hier das Ventilgehäuse dickwandig mit Polytetrafluoräthylen ausgekleidet. Zudem ist das Gehäuse im Wesentlichen kugelförmig ausgebildet.

Der Erfindung liegt daher die Aufgabe zugrunde, ein Überdruckventil vorzuschlagen, mit dem alle drei geforderten Kriterien besser erfüllt werden können.

Die Erfindung löst die gestellte Aufgabe durch ein gattungsgemäßes Überdruckventil mit einem Ventilteller, bei dem die Krempe über einen sich an den ersten Teil anschließenden zweiten Teil verfügt, der einen bezüglich der Längsachse radialen Abschnitt umfasst und an einem der Ventiltellerfläche abgewandten Rand des ersten Teils angeordnet ist. Dies bedeutet, dass der radiale Abschnitt des zweiten Teils der Krempe einen größeren Anteil in radialer Richtung als in axialer Richtung bezüglich der Längsachse aufweist. Als bevorzugt hat sich herausgestellt, wenn der Winkel zwischen dem radialen Abschnitt und der Ventiltellerfläche maximal 30°, bevorzugt maximal 25°, besonders bevorzugt maximal 20° beträgt. Der Winkel ist dabei beispielsweise größer als 0°, bevorzugt größer als 5°, besonders bevorzugt größer als 10°.

Durch diese spezielle Ausgestaltung des ersten Teils und des daran anschließenden zweiten Teils der Krempe werden mehrere Vorteile erreicht. Zum einen kann der erste Teil der Krempe relativ klein, beispielsweise weniger als 10 % bevorzugt weniger als 8 %, besonders bevorzugt weniger als 6 % des Durchmessers des Ventilsitzes ausgebildet werden. Dadurch ist gewährleistet, dass das aus dem Ventilsitz bei kleinen Hüben ausströmende Medium zwar an der Ventiltellerfläche mit dem sich an diese anschließenden ersten Teil der Krempe umgelenkt wird und somit weiterhin eine Kraft auf den Ventilteller nach oben ausübt, gleichzeitig jedoch ein ausreichend großer Volumenstrom abgeführt werden kann. Durch die Ausgestaltung des zweiten Teils der Krempe wird gewährleistet, dass das bei kleinen Hüben umgelenkte ausströmende Medium nicht auf den zweiten Teil der Krempe trifft. Damit wird die bei kleinen Hüben durch das ausströmende Medium angeströmte Fläche nicht vergrößert, so dass es hier nicht zu einer Strömungskraftspitze kommt. Die auf den Ventilteller durch das ausströmende Medium aufgebrachte Kraft ist somit zwar noch immer größer als die Schließkraft, die beispielsweise die Gewichtskraft des Ventiltellers und gegebenenfalls eine zusätzliche Kraft, beispielsweise eine Federkraft, sein kann, so dass der Ventilteller weiter nach oben aufgedrückt wird, sie ist jedoch nicht so groß wie bei Krempenformen aus dem Stand der Technik, so dass der Ventilteller bei einer relativ geringen Druckabnahme im Behälter wieder schließt. Dadurch wird ein geringer Blow Down gewährleistet.

Nimmt die Hubhöhe des Ventiltellers zu, wird der zweite Teil der Krempe, der sich bezüglich der Längsachse in radialer Richtung erstreckt, direkt von aus dem Ventilsitz austretendem Medium angeströmt. Dadurch wird nun die angeströmte Fläche vergrößert, so dass die auf den Ventilteller durch das ausströmende Medium aufgebrachte Kraft ansteigt. Somit ist auch in diesem Hubbereich gewährleistet, dass die auf den Ventilteller aufgebrachte Kraft größer ist als die Schließkraft des Ventils, so dass der Ventilteller weiter weg vom Ventilteller gedrückt wird. Dadurch wird der beschriebene Effekt der Abnahme der Gesamtströmungskraft auf den Ventilteller bei großen Hüben reduziert.

Bei einer erfindungsgemäßen Krempenausgestaltung wirkt die Strömungskraft des ausströmenden Mediums bei kleinen Hüben folglich lediglich auf die Ventiltellerfläche selbst. Der zweite Teil der Krempe hat in diesem Hubbereich wegen des radialen Abschnitts keinen Einfluss. Insbesondere wird durch das anströmende Medium hier keine weitere Kraft auf den Ventilteller ausgeübt. Erst bei größeren Hüben wird auch der zweite Teil der Krempe durch das ausströmende Medium direkt angeströmt, wodurch ein zusätzlicher Strömungskraftanteil auf die Krempe und damit auf den Ventilteller übertragen wird. Dadurch ist gewährleistet, dass die auf den Ventilteller wirkende Gesamtkraft über den gesamten Hubbereich nur noch wenig, im Idealfall sogar gar nicht, variiert. Damit wird sie über den gesamten Hubbereich in einem relativ engen Bereich oberhalb des Ansprechdruckes gehalten, so dass sowohl das schnelle Erreichen des Vollhubes und damit die schnelle Bereitstellung der Gesamtströmungsleistung erreicht wird, und zudem ein geringer Blow-Down gewährleistet wird. Als vorteilhaft hat sich herausgestellt, wenn durch das den zweiten Teil der Krempe anströmende Medium eine Kraft erst bei 15 %, bevorzugt bei 20 %, besonders bevorzugt bei 25 oder 30 % des Vollhubes, also der maximalen Auslenkung des Ventiltellers von einem Ventilsitz weg, auf den Ventilteller ausgeübt wird.

Vorteilhafterweise weist der zweite Teil der Krempe einen vom ersten Teil der Krempe abgewandten Krempenrand auf, der bezüglich der Längsachse in axialer Richtung über den radialen Abschnitt des zweiten Teiles der Krempe hinausragt. Mit dieser Ausgestaltung kann gewährleistet werden, dass bei größeren Hüben, bei denen der zweite Teil der Krempe durch das aus dem Ventilsitz ausströmende Medium direkt angeströmt wird, die dadurch auf die Krempe übertragene Kraft ausreicht, um den Ventilteller weiter vom Ventilsitz wegzubewegen. Ist die Ventiltellerfläche beispielsweise horizontal ausgerichtet und ist der Ventilsitz unterhalb dieser Ventiltellerfläche angeordnet, ist der Krempenrand des zweiten Teils der Krempe beispielsweise nach unten gebogen. Dadurch wird auf den zweiten Teil der Krempe auftreffendes, ausströmendes Medium weiter umgelenkt, so dass einerseits die Ausströmrichtung des Mediums stärker verändert wird und zum anderen eine größere Kraft auf den zweiten Teil der Krempe und damit auf den gesamten Ventilteller aufgebracht wird.

Der erste Teil der Krempe erstreckt sich beispielsweise in einem Winkel von mindestens 0°, bevorzugt mindesten 5°, besonders bevorzugt mindestens 10° und maximal 25°, bevorzugt maximal 20°, besonders bevorzugt maximal 15° gegen die Längsachse. Dadurch, dass der erste Teil der Krempe gegen die Längsachse leicht geneigt ist, kann die Richtung, mit der das ausströmende Medium das Ventil verlässt, beeinflusst werden. Zudem wird dadurch auch die auf den Ventilteller durch das ausströmende Medium aufgebrachte Kraft beeinflusst. Auf diese Weise ist es folglich möglich, sowohl die Ausströmrichtung als auch die auf den Ventilteller ausgeübte Kraft individuell einzustellen.

Vorteilhafterweise weist der erste Teil der Krempe wenigstens eine Durchbrechung auf. Auf diese Weise ist gewährleistet, dass selbst bei kleinsten Hüben bereits ein ausreichend großer Volumenstrom abgeführt werden kann. Dennoch wird das ausströmende Medium ausreichend umgelenkt, so dass auf den Ventilteller eine ausreichend große Kraft ausgeübt wird.

Der zweite Teil der Krempe ist in einem bezüglich der Längsachse radialen Schnitt tragflächenförmig ausgestaltet. Bei kleinen Hüben hat ein auf diese Art ausgestalteter zweiter Anteil der Krempe keinen oder nur einen sehr geringen Einfluss auf das ausströmende und am Ventilteller umgelenkte Medium. Erst bei großen Hüben wird der zweite Teil einer derartig ausgestalteten Krempe auf beiden Seiten umströmt, da ein Teil des ausströmenden Mediums direkt auf die Unterseite des zweiten Teils trifft und ein weiterer Teil durch die wenigstens eine Ausnehmung im ersten Teil der Krempe an der Oberseite des zweiten Teils entlang strömt. Durch die tragflächenartige Ausgestaltung dieses zweiten Teils der Krempe kommt es zu einem Unterdruck oberhalb des zweiten Teils, so dass hier ein Auftrieb erzeugt wird. Auch diese Ausgestaltung liefert folglich erst bei größeren Hüben einen zusätzlichen Kraftanteil auf die Krempe und damit auf den Ventilteller, während bei kleinen Hüben der zweite Teil der Krempe weitgehend wirkungslos ist.

Vorteilhafterweise ist die Ventiltellerfläche kreisförmig ausgebildet.

Vorteilhafterweise ist das Überdruckventil so ausgebildet, dass der Ventilteller nur durch die auf ihn wirkende Gewichtskraft in der Schließstellung gehalten und nur durch auf die Ventiltellerfläche wirkenden Druck aus der Schließstellung heraus verschoben wird.

Die Krempe des Ventiltellers kann zusätzlich über weitere radiale und/oder axiale Abschnitte verfügen. Damit ist eine weitere Feinabstimmung der auf den Ventilteller wirkenden Kraft möglich. Natürlich sind auch schräge oder im Querschnitt bogenförmig ausgebildete Abschnitte denkbar.

Mit Hilfe einer Zeichnung wird nachfolgend ein Ausführungsbeispiel der vorliegenden Erfindung näher erläutert. Es zeigen:
- Fig. 1: - einen Ventilteller eines Überdruckventils nach einem Ausführungsbeispiel der vorliegenden Erfindung in einer Schnittzeichnung,
- Fig. 2: - einen Ventilteller eines Überdruckventils gemäß einem zweiten Ausführungsbeispiel der vorliegenden Erfindung in einer Schnittzeichnung und
- Fig. 3: - den Ventilteller aus Figur 2 in einer 3D-Darstellung,
- Fig. 4a-d: - ein Schaltventil nach einem Ausführungsbeispiel der vorliegenden in verschieden weit geöffnetem Zustand und
- Fig. 5a-d: - ein Schaltventil eines weiteren Ausführungsbeispiels der vorliegenden Erfindung in unterschiedlich weit geöffnetem Zustand

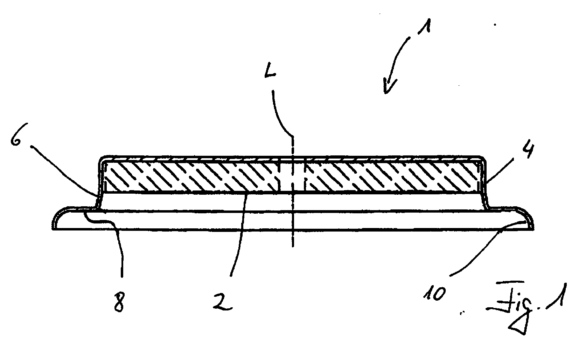

Figur 1 zeigt einen Ventilteller 1 in einer Schnittdarstellung. Der Ventilteller 1 verfügt über eine Ventiltellerfläche 2, mit der der Ventilteller 1 im verschlossenen Zustand des Ventils auf einem in Figur 1 nicht gezeigten Ventilsitz aufliegt. In Figur 1 ist eine gestrichelt angedeutet Längsachse L gezeigt, die senkrecht auf der Ventiltellerfläche 2 steht. Die Ventiltellerfläche 2 weist einen umlaufenden Flächenrand 4 auf, an dem ein erster Teil 6 einer Krempe angeordnet ist, die in axialer Richtung über die Ventiltellerfläche 2 hinausragt. An diesem ersten Teil 6 der Krempe befindet sich ein zweiter Teil 8 der Krempe, der einen vom ersten Teil 6 der Krempe abgewandten, umlaufenden Krempenrand 10 aufweist.

In der in Figur 1 gezeigten Ausrichtung wird ein Ventilteller 1 auf einen unter ihm liegenden nach oben offenen Ventilsitz aufgelegt. Dabei wird der Ventilteller nicht durch eine gesteuerte Hilfskraft geöffnet oder geschlossen, sondern ist im in Figur 1 gezeigten Ausführungsbeispiel lediglich gewichtsbelastet. Der Ventilsitz umfasst eine Öffnung in einem in Figur 1 nicht gezeigten Behältnis, beispielsweise einem Tank. Das Medium, das sich in dem Behältnis befindet, drückt in der in Figur 1 gezeigten Orientierung von unten gegen die Ventiltellerfläche 2. Übersteigt der Druck einen voreingestellten Ansprechdruck wird der Ventilteller 1 angehoben. Da der erste Teil 6 der Krempe in axialer Richtung bezogen auf die Längsachse L relativ klein ausgebildet ist, wird das ausströmende Medium am Ventilteller 1 und dem ersten Teil 6 der Krempe umgelenkt und verlässt den Ventilteller 1 nach unten. Dabei ist durch den in Figur 1 horizontal ausgebildeten radialen Abschnitt des zweiten Teiles 8 der Krempe gewährleistet, dass weder der zweite Teil 8 noch der daran befindliche Krempenrand 10 einen Einfluss auf das ausströmende Medium hat. Erst bei größeren Hüben kann das ausströmende Medium auch den zweiten Teil 8 der Krempe anströmen, wodurch ein weiterer Kraftanteil auf den Ventilteller 1 wirkt. Dabei wird es vom nach unten gebogenen Krempenrand 10 umgelenkt, wodurch die auf dem Ventilteller 1 ausgeübte Kraft im Vergleich zu einem geraden Krempenrand 10 vergrößert wird.

Durch diese Ausgestaltung des Ventiltellers kann gewährleistet werden, dass die auf den Ventilteller 1 wirkende Kraft über den gesamten Hubweg größer ist als eine Schließkraft des Ventiltellers 1, diese jedoch nur um einen relativ kleinen Betrag übersteigt. Auf diese Weise wird neben dem schnellen Erreichen des Maximal-Hubes und der damit verbundenen schnellen Bereitstellung der maximalen Strömungsleistung auch ein geringer Blow-Down erreicht.

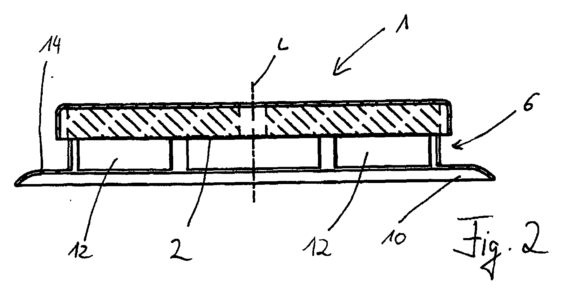

Figur 2 zeigt einen Ventilteller 1 gemäß einem zweiten Ausführungsbeispiel der vorliegenden Erfindung. Auch er verfügt über eine Ventiltellerfläche 2, in die gestrichelt eine Längsachse L eingezeichnet ist. Der erste Teil 6 der Krempe weist in Figur 2 Durchbrechungen 12 auf, durch die aus einem Ventilsitz ausströmendes Medium den Ventilteller verlassen kann. Dabei strömt das Medium bei kleinen Hüben nur oberhalb einer Oberseite 14 eines zweiten Teils 8 der Krempe entlang. Bei kleinen Hüben hat der zweite Teil 8 der Krempe folglich keinen oder nur einen sehr geringen Einfluss auf das ausströmende Medium.

Bei größeren Hüben wird der zweite Teil 8 der Krempe auch direkt angeströmt, so dass der zweite Teil 8 der Krempe sowohl auf der Oberseite 14 als auch auf der Unterseite vom ausströmenden Medium umströmt wird.

Im Schnitt ist der zweite Teil 8 tragflächenartig geformt, so dass durch das im Wesentlichen horizontale Anströmen der Oberseite 14 und der Unterseite des zweiten Teils 8 ein Unterdruck oberhalb der Oberseite 14 des zweiten Teils 8 entsteht, so dass hier ein Auftrieb generiert wird, der den Ventilteller 1 weiter nach oben bewegt.

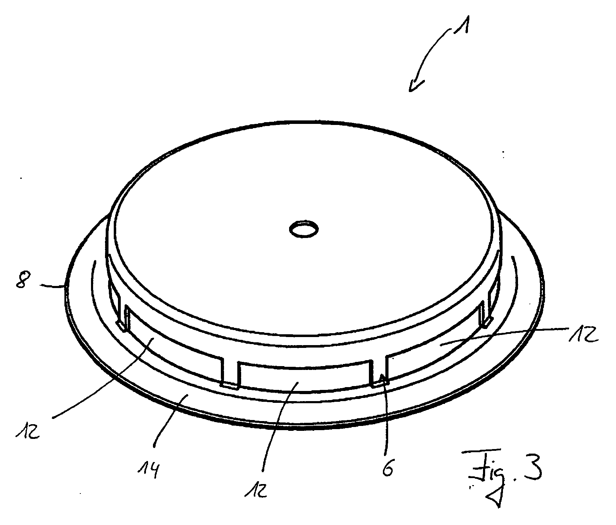

Figur 3 zeigt den Ventilteller 1 aus Figur 2 in einer dreidimensionalen Ansicht. Deutlich zu erkennen sind die Durchbrechungen 12 im ersten Teil 6 der Krempe, durch die austretendes Medium über eine Oberseite 14 des zweiten Teils 8 der Krempe hinwegströmt. Durch einen in Figur 2 und 3 gezeigten Ventilteller kann also sichergestellt werden, dass in Abhängigkeit des Hubes des Ventiltellers unterschiedliche Kraftanteile auf den Ventilteller 1 wirken, und so die Gesamtkraft immer in einem relativ schmalen Bereich oberhalb des Ansprechdruckes gehalten werden kann.

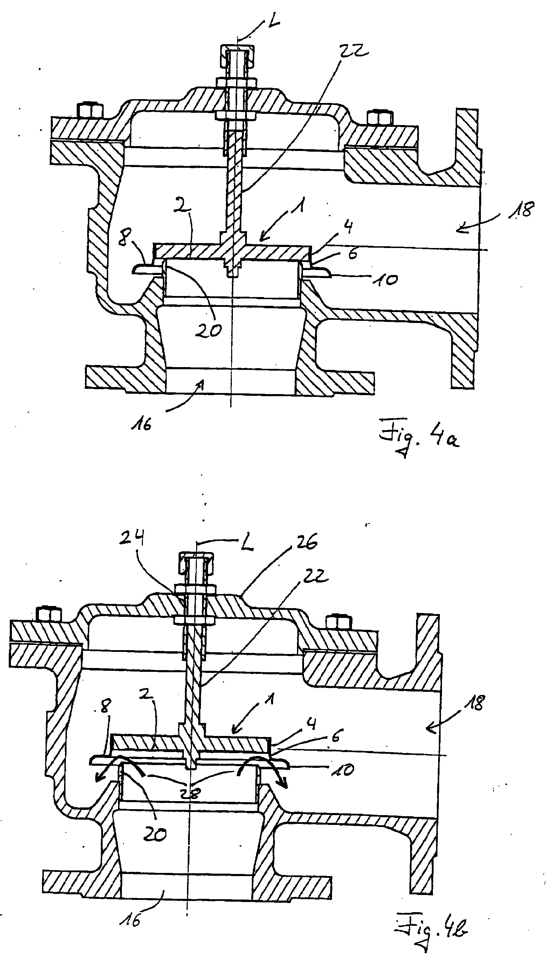

Die Figuren 4a bis 4d zeigen ein Schaltventil gemäß einem Ausführungsbeispiel der vorliegenden Erfindung in verschieden weit geöffnetem Zustand. Das Ventil verfügt über eine erste Verbindungsöffnung 16 und eine zweite Verbindungsöffnung 18. Wird das gezeigte Schaltventil als ein Überdruckventil verwendet, darf in einem Behälter ein vorbestimmter Druck nicht überschritten werden. Dieser Behälter wird in diesem Fall mit der ersten Verbindungsöffnung 16 des Ventils verbunden. Steigt der Druck in diesem Behälter über den vorbestimmten Ansprechdruck wird der Ventilteller 1 angehoben und das Ventil geöffnet. Das Medium kann dann aus dem Behälter durch die erste Verbindungsöffnung 16 in das Ventil ein- und durch die zweite Verbindungsöffnung 18 aus dem Ventil austreten.

Wird das Schaltventil jedoch als Unterdruckventil verwendet, darf in einem Behälter ein vorbestimmter Druck nicht unterschritten werden. Dieser Behälter wird dann mit der zweiten Verbindungsöffnung 18 verbunden. Sinkt in dem Behälter der Druck unter den vorbestimmten Ansprechdruck, wird durch den auch im Bereich oberhalb des Ventiltellers 1 entstehenden Unterdruck der Ventilteller 1 nach oben gesogen und das Ventil geöffnet. In diesem Fall kann ein Medium durch die erste Verbindungsöffnung 16 in das Ventil ein und durch die zweite Verbindungsöffnung 18 aus dem Ventil austreten und gelangt so in den Behälter, wo es zum Druckausgleich kommt.

Das in den Figuren 4a bis 4d gezeigte Schaltventil verfügt zudem über einen Ventilsitz 20, an dem der Ventilteller 1 mit der Ventiltellerfläche 2 im geschlossen Zustand anliegt. Dieser Zustand ist in Figur 4a gezeigt. Der Ventilteller 1 liegt mit seiner Ventiltellerfläche 2 am Ventilsitz 20 des Schaltventils an und verhindert so einen Materialfluss von der ersten Verbindungsöffnung 16 zur zweiten Verbindungsöffnung 18 des Schaltventils.

Figur 4b zeigt das Schaltventil aus Figur 4a in einem leicht geöffneten Zustand. Deutlich zu erkennen ist, dass der Ventilteller 1 mit der Ventiltellerfläche 2 nicht mehr am Ventilsitz 20 des Schaltventils anliegt. Es kann nun also zu einem Materialfluss von der ersten Verbindungsöffnung 16 zur zweiten Verbindungsöffnung 18 durch den Ventilsitz 20 des Schaltventils kommen. Dabei strömt das Medium durch die erste Verbindungsöffnung 16 und trifft auf die Ventiltellerfläche 2 des Ventiltellers 1. Dadurch wird der Ventilteller entlang seiner Längsachse L bewegt. Zu diesem Zweck ist an der Oberseite des Ventiltellers 1 eine Führung 22 angeordnet, die durch eine Ausnehmung 24 in einem oberen Teil 26 eines Gehäuses des Schaltventils verschieblich gelagert ist. Das Medium, das aus der ersten Verbindungsöffnung 16 durch den Ventilsitz 20 gegen die Ventiltellerfläche 2 des Ventiltellers 1 strömt, wird an einem ersten Teil der Krempe 6 nach unten umgelenkt bevor es das Schaltventil durch die zweite Verbindungsöffnung 18 verlässt. Die Strömungsrichtung des Mediums ist in Figur 4b durch Pfeile 28 dargestellt. Man erkennt, dass in diesem Öffnungszustand des Schaltventils der zweite Teil der Krempe 8 und der gebogene Krempenrand 10 keinen Einfluss auf das strömende Medium entlang der Pfeile 28 hat.

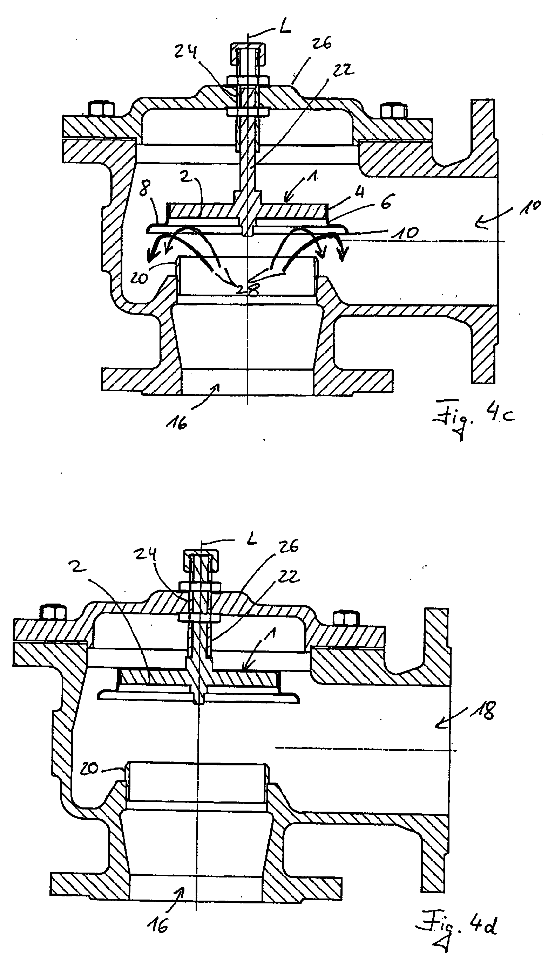

Figur 4c zeigt das Schaltventil aus den Figuren 4a und 4b in einem weiter geöffneten Zustand. Der Ventilteller 1 ist mit seiner Ventiltellerfläche 2 im Vergleich zu der in Figur 4b dargestellten Situation nun weiter vom Ventilsitz 20 des Schaltventils entfernt. Eine Strömungsrichtung eines Mediums, das von der ersten Verbindungsöffnung 16 durch den Ventilsitz 20 zur zweiten Verbindungsöffnung 18 des Schaltventils strömt, ist wieder durch Pfeile 28 dargestellt. Man erkennt, dass ein Teil des strömenden Mediums weiterhin von unten gegen die Ventiltellerfläche 2 strömt und am ersten Teil der Krempe 6 nach unten umgelenkt wird. Ein weiterer Anteil des strömenden Mediums trifft jedoch nun auf den zweiten Teil der Krempe 8 und wird vom nach unten gebogenen Krempenrand 10 ebenfalls nach unten abgelenkt, bevor es das Schaltventil durch die zweite Verbindungsöffnung 18 verlassen kann. In diesem Stadium der Ventilöffnung wird folglich auch durch an dem zweiten Teil der Krempe 8 strömendes Medium eine Kraft auf den Ventilteller 1 übertragen, durch die er weiter nach oben gedrückt wird. Erst in diesem Stadium der Öffnung des Schaltventils hat der zweite Teil der Krempe 8 mit dem Krempenrand 10 einen Einfluss auf die Strömungsrichtung des ausströmenden Mediums, wodurch der zusätzliche Kraftanteil nach oben auf den Ventilteller 1 hervorgerufen wird, der für eine möglichst schnelle Öffnung des Schaltventils, also ein Bringen des Ventiltellers 1 auf Vollhub, notwendig ist.

In Figur 4d ist die Situation gezeigt, in der sich der Ventilteller 1 in der maximal angehobenen Position, also bei Vollhub, befindet. Das von der ersten Verbindungsöffnung 16 zur zweiten Verbindungsöffnung 18 durch den Ventilsitz 20 strömende Medium trifft immer noch von unten auf die Ventiltellerfläche 2 und drückt so den Ventilteller 1 weiter nach oben. Dies geschieht so lange, bis der Druck in einem Behälter, der an der zweiten Verbindungsöffnung 18 angeordnet ist, wieder oberhalb eines vorbestimmten Ansprechruckes liegt, falls das Schaltventil als Unterdruckventil verwendet wird oder bis der Druck in einem Behälter, der an der ersten Verbindungsöffnung 16 angeordnet ist, wieder unterhalb des vorbestimmten Ansprechdruckes liegt, falls das Schaltventil als Überdruckventil verwendet wird. Die für die Schaltung des Ventils wesentliche Größe ist folglich die Druckdifferenz zwischen dem Druck an der ersten Verbindungsöffnung 16 und dem Druck an der zweiten Verbindungsöffnung 18. Erst wenn diese Druckdifferenz einen bestimmten Wert unterschritten hat, reicht die durch das durchströmende Medium auf den Ventilteller 1 ausgeübte Kraft nicht mehr aus, um den Ventilteller 1 in seiner angehobenen Durchlassposition zu halten, weshalb sich der Ventilteller 1 in diesem Fall wieder nach unten bewegt und das Ventil schließt.

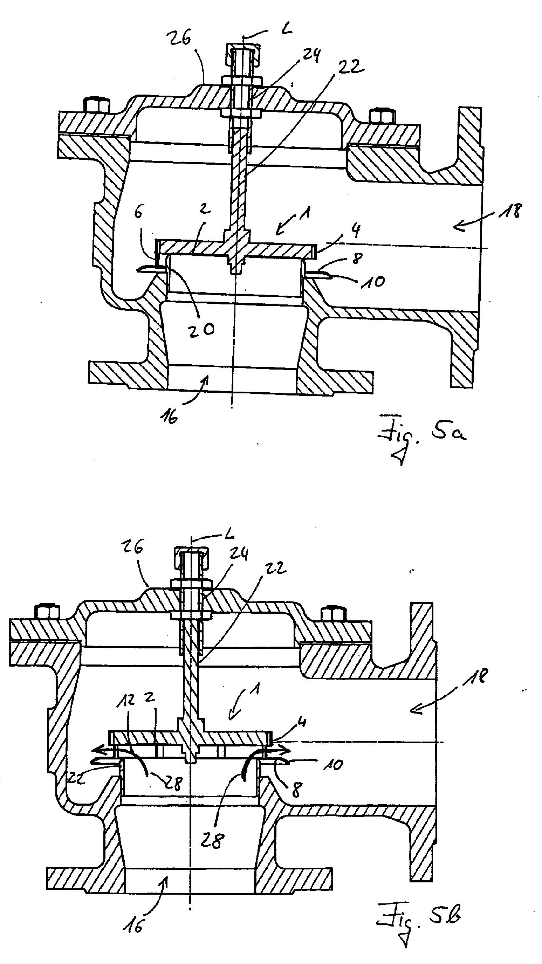

Die Figuren 5a bis 5d zeigen die in den Figuren 4a bis 4d gezeigten Situationen eines Schaltventils, wobei das in den Figuren 5a bis 5d gezeigte Schaltventil jedoch einen anderen Ventilteller 1 aufweist.

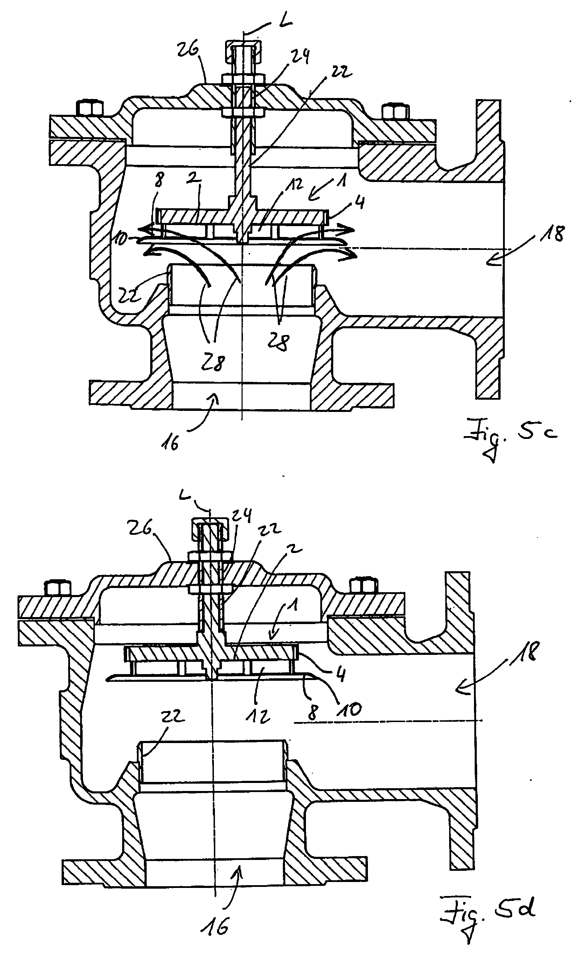

Das in den Figuren 5a und 5d gezeigte Ausführungsbeispiel eines Schaltventils verfügt über einen Ventilteller 1, wie er beispielsweise in Figur 2 dargestellt ist. Figur 5a zeigt die Situation, in der das Schaltventil geschlossen ist. Der Ventilteller 1 liegt mit seiner Ventiltellerfläche 2 an dem Ventilsitz 20 des Schaltventils an, sodass das Ventil geschlossen ist.

Figur 5b zeigt die Situation, in der der Ventilteller 1 durch eine Druckdifferenz zwischen dem Druck an der ersten Verbindungsöffnung 16 und dem Druck einer zweiten Verbindungsöffnung 18 bereits leicht angehoben wurde. Der Ventilteller 1 liegt mit seiner Ventiltellerfläche 2 nicht mehr am Ventilsitz 22 an. Auch in den Figuren 5a bis 5d kann der Ventilteller 1 entlang seiner Längsachse L verschoben werden. Auch hier ist dafür eine Führung 22 vorgesehen, die in einer Ausnehmung 24 eines oberen Teils 26 eines Gehäuses des Ventils verschieblich gelagert ist.

In dem Schaltventil, das in den Figuren 5a bis 5d gezeigt ist, weist der Ventilteller 1 einen ersten Teil der Krempe 6 auf, der mit Durchbrechungen 12 versehen ist. Figur 5b zeigt die Situation, in der der Ventilteller 1 genau so weit angehoben ist, dass ein Medium von der ersten Verbindungsöffnung 16 zur zweiten Verbindungsöffnung 18 strömen kann, indem es durch diese Durchbrechungen 12 hindurchströmt. Die Strömungsrichtung dieses Mediums ist auch in Figur 5b durch Pfeile 28 angedeutet. Das strömende Medium trifft in der in Figur 5b gezeigten Situation von unten auf die Ventiltellerfläche 2 des Ventiltellers 1 und wird an dieser umgelenkt, sodass es in Figur 5b in horizontaler Richtung durch die Durchbrechungen 12 im ersten Teil der Krempe 6 strömen kann. Dadurch, dass das Medium an der Ventiltellerfläche 2 umgelenkt wird, wird eine Kraft auf den Ventilteller 1 ausgeübt, die ihn weiter nach oben drückt.

Diese Situation ist in Figur 5c gezeigt. Der Ventilteller 1 ist im Vergleich zu der in Figur 5b gezeigten Situation weiter vom Ventilsitz 22 entfernt. Das durch das Ventil von der ersten Verbindungsöffnung 16 zur zweiten Verbindungsöffnung 18 strömenden Medium trifft zumindest zum Teil weiterhin von unten gegen die Ventiltellerfläche 2. An dieser wird es umgelenkt und verlässt den Ventilteller 1 in nahezu horizontaler Richtung durch die Durchbrechungen 12 im ersten Teil der Krempe 6. Ein weiterer Teil des Mediums trifft nicht auf die eigentliche Ventiltellerfläche 2 sondern trifft von unten gegen den zweiten Teil der Krempe 8 und wird an diesem und an dem nach unten gebogenen Krempenrand 10 umgelenkt. Die Strömungsrichtung des Mediums ist auch in Figur 5c durch Pfeile 28 dargestellt.

Wie in Figur 5c deutlich zu erkennen ist, wird der zweite Teil der Krempe 8 mit dem Krempenrand 10 an zwei Seiten, nämlich oberhalb und unterhalb des zweiten Teils der Krempe 8, vom Medium umströmt. In einem bevorzugten Ausführungsbeispiel der Erfindung ist dieser zweite Teil der Krempe 8 im in den Figuren 5a bis 5d gezeigten Schnitt tragflächenförmig ausgestaltet. Durch diese Ausgestaltung kommt es bei der beidseitigen Umströmung des zweiten Teils der Krempe 8 durch das Ventil strömende Medium zu einem Auftrieb, wodurch der Ventilteller 1 weiter nach oben bewegt wird.

Figur 5d zeigt das Ventil aus den Figuren 5a bis 5c, bei dem sich der Ventilteller 1 in der Vollhubstellung befindet. Der Ventilteller 1 ist folglich maximal nach oben verschoben, und das Ventil maximal geöffnet. Auch in diesem Zustand trifft ein Teil des von der ersten Verbindungsöffnung 16 zur zweiten Verbindungsöffnung 18 strömenden Mediums von unten auf die Ventiltellerfläche 2 und wird an dieser umgelenkt. Dadurch wird weiterhin eine Kraft auf den Ventilteller 1 ausgeübt, die nach oben drückt. Ebenfalls wird der zweite Teil der Krempe 8 mit dem Krempenrand 10 sowohl oberhalb als auch unterhalb des zweiten Teils der Krempe 8 vom durchströmenden Medium umströmt, sodass weiterhin ein Auftrieb erzeugt wird, durch den der Ventilteller 1 weiter in seiner maximalen Durchlassstellung gehalten wird. Erst wenn die Druckdifferenz zwischen einem Druck an der ersten Verbindungsöffnung 16 und einem Druck an der zweiten Verbindungsöffnung 18 unterhalb eines vorbestimmten Ansprechdruckes fällt, ist die auf den Ventilteller 1 durch das strömende Medium ausgeübte Kraft nicht mehr groß genug, den Ventilteller 1 in seiner Durchlassstellung zu halten. Der Ventilteller 1 bewegt sich dann entlang der Führung 22 und der Längsachse L nach unten und das Ventil schließt wieder.

### Bezugszeichenliste

- L: Längsachse
- 1: Ventilteller
- 2: Ventiltellerfläche
- 4: Flächenrand
- 6: erste Teil der Krempe
- 8: zweiter Teil der Krempe
- 10: Krempenrand
- 12: Durchbrechung
- 14: Oberseite
- 16: erste Verbindungsöffnung
- 18: zweite Verbindungsöffnung
- 20: Ventilsitz
- 22: Führung
- 24: Ausnehmung
- 26: oberer Teil
- 28: Pfeil

## Patentansprüche

1. Schaltventil mit einem Ventilsitz und einem Ventilteller (1), der aus einer Schließstellung, in der der Ventilteller (1) mit einer Ventiltellerfläche an dem Ventilsitz anliegt und das Schaltventil geschlossen ist, in eine Durchflussöffnung bringbar ist, in der das Schaltventil geöffnet ist, wobei die Ventiltellerfläche (2) einen umlaufenden Flächenrand (4) und eine Normale, die senkrecht auf der Ventiltellerfläche (2) steht, durch deren Schwerpunkt verläuft und eine Längsachse L definiert, aufweist, wobei an dem Flächenrand (4) eine Krempe angeordnet ist, die über einen an dem Flächenrand (4) angeordneten ersten Teil (6), der bezüglich der Längsachse L in axialer Richtung über die Ventiltellerfläche (2) hinausragt, verfügt, **dadurch gekennzeichnet, dass** die Krempe über einen sich an den ersten Teil (6) anschließenden zweiten Teil (8) verfügt, der einen bezüglich der Längsachse L radialen Abschnitt umfasst und an einem der Ventiltellerfläche abgewandten Rand des ersten Teils (6) angeordnet ist.

2. Schaltventil nach Anspruch 1, **dadurch gekennzeichnet, dass** der zweite Teil (8) der Krempe einen von dem ersten Teil (6) abgewandten Krempenrand (10) aufweist, der bezüglich der Längsachse L in axialer Richtung über den radialen Abschnitt des zweiten Teiles (8) der Krempe hinausragt.

3. Schaltventil nach Anspruch 1 oder 2, **dadurch gekennzeichnet, dass** der erste Teil (6) der Krempe sich in einem Winkel von mindestens 0°, bevorzugt mindestens 5°, besonders bevorzugt mindestens 10° und maximal 25°, bevorzugt maximal 20°, besonders bevorzugt maximal 15° gegen die Längsachse L erstreckt.

4. Schaltventil nach einem der vorstehenden Ansprüche, **dadurch gekennzeichnet, dass** der erste Teil (6) der Krempe wenigstens eine Durchbrechung (12) aufweist.

5. Schaltventil nach Anspruch 4, **dadurch gekennzeichnet, dass** der zweite Teil (8) der Krempe in einem bezüglich der Längsachse L radialen Schnitt tragflächenförmig ausgestaltet ist.

6. Schaltventil nach einem der vorstehenden Ansprüche, **dadurch gekennzeichnet, dass** die Ventiltellerfläche (2) kreisförmig ausgebildet ist.

7. Schaltventil nach einem der vorstehenden Ansprüche, **dadurch gekennzeichnet, dass** das Schaltventil so ausgebildet ist, dass der Ventilteller (1) nur durch die auf ihn wirkende Gewichtskraft in der Schließstellung gehalten und nur durch auf die Ventiltellerfläche (2) wirkenden Druck aus der Schließstellung heraus verschoben wird.

## Claims

1. A switch valve with a valve seat and a valve plate (1) that can be moved from a closed position, in which the valve plate (1) is - with a valve plate surface - in contact with the valve seat and the switch valve is closed, into a through-flow position, in which the switch valve is open, wherein the valve plate surface (2) comprises a circumferential surface edge (4) and a perpendicular, which runs vertically to the valve plate surface (2) and through the valve plate surface's centre of gravity and defines a longitudinal axis L, wherein a brim is arranged at the surface edge (4), the brim comprising a first part (6), which is arranged at the surface edge (4), wherein the first part (6) protrudes from the valve plate surface (2) in an axial direction relative to the longitudinal axis L, **characterised by** the fact that the brim comprises a second part (8) that extends from the first part (6), the second part (8) comprising a radial section relative to the longitudinal axis L and is connected to one of the valve plate surface's averted edges of the first part (6).

2. The switch valve according to claim 1, **characterised by** the fact that the second part of the brim (8) has a brim edge (10) that faces away from the first part (6), the brim edge (10) extending from the radial section of the second part (8) in an axial direction relative to the longitudinal axis L.

3. The switch valve according to claim 1 or 2, **characterised by** the fact that the first part (6) of the brim stretches at an angle of at least 0°, preferably at least 5°, especially preferably at least 10° and at a maximum of 25°, preferably a maximum of 20°, especially preferably a maximum of 15°, towards the longitudinal axis L.

4. The switch valve according to one of the above claims, **characterised by** the fact that the first part (6) of the brim has at least one gap (12).

5. The switch valve according to claim 4, **characterised by** the fact that the second part (8) of the brim has a cross section in the shape of a wing panel with respect to a radial section relative to the longitudinal axis L.

6. The switch valve according to one of the above claims, **characterised by** the fact that the valve plate surface (2) is circular.

7. The switch valve according to one of the above claims, **characterised by** the fact that the switch valve is designed in such a way that the valve plate (1) is only held in the closed position by the weight force acting on it and is only moved out of the closed position by the pressure acting on the valve plate surface (2).

## Revendications

1. Vanne de commutation avec un siège de vanne et un opercule de vanne (1), qui est susceptible d'être amené depuis une position fermée, dans laquelle l'opercule de vanne s'applique sur le siège de vanne avec une surface d'opercule et la vanne de commutation est fermée, jusque dans une ouverture traversante, dans laquelle la vanne de commutation est ouverte, dans laquelle la surface d'opercule (2) comporte une bordure de surface périphérique (4) et une normale, dressée perpendiculairement sur la surface d'opercule (2), passant par son centre de gravité et définissant un axe longitudinal L, dans laquelle une collerette est agencée sur la bordure de surface (4), laquelle dispose d'une première partie (6) agencée sur la bordure de surface (4) et qui dépasse au-delà de la surface d'opercule (2) par référence à l'axe longitudinal (L) en direction axiale,
**caractérisée en ce que** la collerette dispose d'une seconde partie (8) qui se raccorde à la première partie (6), qui inclut une portion radiale par référence à l'axe longitudinal L, et qui est agencée à une bordure, détournée de la surface d'opercule, de la première partie (6).

2. Vanne de commutation selon la revendication 1, **caractérisée en ce que** la seconde partie (8) de la collerette comporte une bordure de collerette (10), détournée de la première partie (6), qui dépasse au-delà de la portion radiale de la seconde partie (8) de la collerette, par référence à l'axe longitudinal (L) en direction axiale.

3. Vanne de commutation selon la revendication 1 ou 2, **caractérisée en ce que** la première partie (6) de la collerette s'étend sous un angle d'au moins 0°, de préférence au moins 5°, de manière particulièrement préférée au moins 10° et au maximum de 25°, de préférence au maximum 20°, et de manière particulièrement préférée au maximum 15° par rapport à l'axe longitudinal L.

4. Vanne de commutation selon l'une des revendications précédentes, **caractérisée en ce que** la première partie (6) de la collerette comporte au moins une traversée (12).

5. Vanne de commutation selon la revendication 4, **caractérisée en ce que** la seconde partie (8) de la collerette est conçue sous forme de surface portante, dans une coupe radiale par référence à l'axe longitudinal (L).

6. Vanne de commutation selon l'une des revendications précédentes, **caractérisée en ce que** la surface d'opercule (2) est réalisée sous forme circulaire.

7. Vanne de commutation selon l'une des revendications précédentes, **caractérisée en ce que** la vanne de commutation est ainsi réalisée que l'opercule de vanne (1) est maintenu dans la position fermée uniquement par la force pondérale agissant sur lui-même, et est déplacé hors de la position fermée uniquement par la pression agissant sur la surface d'opercule (2).
